# EUROPEAN PATENT APPLICATION

(11) **EP 4 647 281 A1**
(43) Date of publication of application: **12.11.2025**
(21) Application number: 25169323.0
(22) Date of filing: 09.04.2025
(51) Int. Cl.: B60K 1/04, B60K 11/06

(54) **BATTERY COOLING STRUCTURE AND VEHICLE**

(30) Priority: 09.05.2024 JP 2024076381
(71) Applicant: Mazda Motor Corporation, Aki-gun, Hiroshima 730-8670 (JP)
(72) Inventor: Nakagawa, Hiromasa, Hiroshima, 730-8670 (JP); Nakayama, Shota, Hiroshima, 730-8670 (JP); Nozaki, Osamu, Hiroshima, 730-8670 (JP)
(74) Representative: Müller-Boré & Partner Patentanwälte PartG mbB

(57) **Abstract**

A vehicle equipped with a battery 20 is provided with a cooling air duct 15A inside which cooling air to be supplied to the battery 20 flows, and a duct-top-seat 3A on which an occupant can sit, the duct-top-seat 3A being disposed in front of the battery 20 in a vehicle front-rear direction and above the cooling air duct 15A. An upstream end 110A of the cooling air duct 15A opens below the duct-top-seat 3A toward one side in a width direction of the duct-top-seat 3A.

## Description

### [Technical Field]

The present invention relates to a battery cooling structure. The present invention also relates to a vehicle.

### [Background Art]

Vehicles equipped with a battery are known, each of which is provided with a structure for cooling the battery.

For example, Patent Literature 1 discloses a vehicle including a battery (battery pack) and a duct for supplying cooling air to the battery, in which the battery is disposed below a trunk room and the duct is disposed so as to extend from below a rear seat to the trunk room in a posture in which the duct opens forward. This structure allows the air in a vehicle cabin that is kept at a relatively low temperature by air conditioning or the like to be supplied to the battery, and allows the battery to be cooled by this **air.**

### [Citation List]

### [Patent Literature]

[Patent Literature 1] Japanese Patent Laid-Open No. 2018-30514

### [Summary]

### [Problems to be Solved]

In the structure of Patent Literature 1, the duct is disposed below the rear seat in a posture in which the duct opens forward. This may cause the legs of an occupant sitting on the rear seat to cover the opening of the duct. If the opening is covered by the legs of the occupant, a sufficient amount of cooling air cannot be introduced into the duct and the battery in turn, and the cooling performance of the battery decreases.

The present invention has been made in consideration of the above-mentioned circumstances, and an object thereof is to provide a battery cooling structure capable of cooling a battery well.

### [Means for Solving the Problems]

The above problem is solved by the invention as defined in claim 1. Particularly, a battery cooling structure for cooling a battery includes: a cooling air duct inside which cooling air to be supplied to the battery flows; and a seat or a duct-top-seat on which an occupant can sit, the seat or the duct-top-seat being disposed in front of the battery in a vehicle front-rear direction and above the cooling air duct, An upstream end of the cooling air duct is open below the seat or the duct-top-seat toward one side of the seat or the duct-top-seat in a width direction.

According to the present invention, air inside a vehicle cabin in which the seat or the duct-top-seat is disposed can be supplied to the battery through the cooling air duct located below the seat or the duct-top-seat. Therefore, the battery can be disposed behind the seat or the duct-top-seat while being cooled by the air at relatively low temperature in the vehicle cabin. Moreover, the cooling air duct is disposed below the seat or the duct-top-seat in a posture in which an upstream end of the cooling air duct opens toward one side of the seat or the duct-top-seat in the width direction. This makes it possible to effectively use the space below the seat or the duct-top-seat as an installation space for the battery cooling duct while preventing the legs of an occupant sitting on the seat or the duct-top-seat from closing the upstream end of the cooling air duct. This then enables securing the amount of cooling air introduced into the cooling air duct and the battery in turn, and cooing the battery well.

The seat or the duct-top-seat may be mounted, for example, in a posture in which a width direction of the seat or the duct-top-seat coincides with a vehicle width direction.

In the above configuration, preferably, the seat or the duct-top-seat may be disposed adjacently to a side surface of a vehicle cabin in a vehicle width direction, and the upstream end of the cooling air duct may open toward the side surface.

In this configuration, the space in front of where the upstream end of the cooling air duct opens is made into a space, located between the seat or the duct-top-seat and the side surface of the vehicle cabin adjacent thereto, that has relatively little opportunity in which luggage or the like is loaded. This prevents the upstream end of the cooling air duct from being closed by luggage or the like.

In the above configuration, preferably, the seat or the duct-top-seat may be disposed adjacently to a door provided in the vehicle, and the upstream end of the cooling air duct may open toward a peripheral member provided in a periphery of the door.

The door provided in the vehicle cabin is opened and/or closed relatively frequently, and there is little opportunity for luggage or the like to be loaded between the peripheral members located in the periphery of the door and the seat. This configuration therefore makes it possible to more reliably prevent the upstream end of the cooling air duct from being closed by luggage or the like.

In the above configuration, preferably, the cooling air duct may be disposed at a position shifted toward the one side from a center of the seat or the duct-top-seat in the width direction of the seat or the duct-top-seat.

With this configuration, the cooling air duct is disposed below a part of the seat or the duct-top-seat, the part receiving a relatively small load from a sitting occupant. This makes it possible to reduce the load applied to the cooling air duct to prevent damage thereto.

In the above configuration, preferably, a recess recessed upward is formed in a lower part of the seat or the duct-top-seat on the one side in the width direction of the seat or the duct-top-seat, and the upstream end of the cooling air duct is disposed below the recess and is disposed inward of an end surface of the seat or the duct-top-seat on the one side in the width direction of the seat or the duct-top-seat (claim 6).

With this configuration, the upstream end of the cooling air duct can be prevented from being closed by the seat or the duct-top-seat while the seat or the duct-top-seat can cover the upper part of the space in front of the upstream end in the opening direction, thereby preventing foreign objects such as dust from entering into the cooling air duct.

In the above configuration, preferably, a foreign object entry prevention portion having a mesh shape may be provided at the cooling air introduction portion. The foreign object entry prevention portion may be configured to prevent a foreign object from entering an inside of the cooling air duct.

This configuration makes it possible to prevent foreign objects from entering the cooling air duct through the cooling air introduction portion.

In the above configuration, preferably, the battery cooling structure may further include a floor panel that forms a floor surface of a vehicle cabin, and the cooling air duct may include a bottom wall forming a lower surface of the cooling air duct, and a passage partition portion disposed above the bottom wall and defining, together with the bottom wall, a passage therebetween through which cooling air flows. The bottom wall may be formed by the floor panel.

In this configuration, the floor panel is used for the bottom wall that forms the lower surface of the cooling air duct. This makes it possible to secure the dimension of the cooling air duct in the up-down direction while lowering the height position of the cooling air duct. This then makes it possible to secure the flow path area of the cooling air duct and the flow rate of the cooling air in turn while preventing interference between the cooling air duct and the seat or the duct-top-seat.

In the above configuration, preferably, a seal member made of an elastic member may be disposed between the passage partition portion and the floor panel, and the cooling air duct may include a fixing portion that is formed integrally with the passage partition portion and fixes the passage partition portion to the floor panel, and a protrusion that protrudes downward from the passage partition portion and is in contact with the floor panel.

This configuration makes it possible to use the floor panel, which has a complicated shape, as the bottom wall while closing the gap between the floor panel and the passage partition portion with the seal member. This makes it possible to prevent the cooling air from leaking to the outside in the middle of the cooling air duct. However, simply providing a seal member made of an elastic member between the floor panel and the passage partition portion alone makes it likely that the passage partition portion is displaced in the up-down direction. Therefore, when the passage partition portion moves significantly downward relative to the floor panel due to the application of a load from the seat or the duct-top-seat to the passage partition portion, simply providing a seal member alone may cause a shift in the relative position between the fixing portion fixed to the floor panel and the passage partition portion in the up-down direction, causing damage to the periphery of the fixing portion. In contrast, in the above configuration, the protrusion is provided that protrudes downward from the passage partition portion to be in contact with the floor panel, so that excessive downward movement of the passage partition portion can be prevented. This makes it possible to close the gap between the floor panel and the passage partition portion with the seal member while preventing the above-described damage.

In the above configuration, preferably, the seat or the duct-top-seat may be a rear seat disposed behind a driver's seat.

With this configuration, the battery can be disposed in the rear of the vehicle while air within the vehicle cabin is supplied to the battery.

### [Advantageous Effect]

As described above, the battery cooling structure of the present invention can cool the battery well.

### [Brief Description of Drawings]

FIG. 1 is a schematic plan view of a vehicle to which a battery cooling structure according to one embodiment of the present invention is applied.
FIG. 2 is a schematic plan view showing part of the vehicle.
FIG. 3 is a schematic plan view in a state in which a second row seat, a trunk panel, and rear panels are removed from FIG. **2****.**
FIG. 4 is a partial cross-sectional view of the vehicle taken along a line IV-IV in FIG. 2.
FIG. 5 is a schematic plan view showing an inside of a battery.
FIG. 6 is a schematic cross-sectional view showing an inside of the battery.
FIG. 7 is a schematic perspective view of a battery module.
FIG. 8 is a schematic perspective view of an in-case duct.
FIG. 9 is a schematic perspective view showing part of the battery taken along a line IX-IX in FIG. 5.
FIG. 10 is a schematic view showing part of a cross section taken along a line X-X in FIG. 2.
FIG. 11 is a schematic side view of a lower periphery of a right seat as viewed from a right.
FIG. 12 is a schematic perspective view of a duct body.
FIG. 13 is a schematic perspective view showing part of the duct body.
FIG. 14 is a schematic cross-sectional view taken along a line XIV-XIV in FIG. 3.

### [Embodiment for Carrying Out the Invention]

### (1) Overall configuration of the vehicle

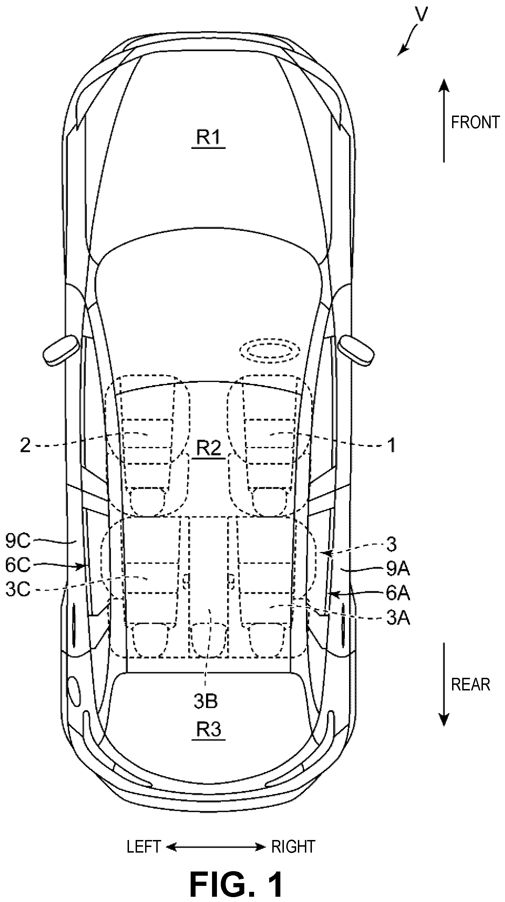

FIG. 1 is a schematic plan view of a vehicle V to which a battery cooling structure according to one embodiment of the present invention is applied. In the following, the front-rear direction (or the longitudinal direction) of the vehicle V (vehicle front-rear direction) is referred to simply as a front-rear direction as appropriate, and the moving direction when the vehicle V moves forward is referred to as a front, and the opposite side as a rear.

The direction perpendicular to the front-rear direction in a plan view is referred to as a left-right direction (or a width direction), and the right side with the vehicle facing forward is referred to as a right and the opposite side as a left. The direction perpendicular to the front-rear direction and the left-right direction is referred to as an up-down direction (or a vertical direction), and the ground side of the vehicle V is referred to as a down side (or a lower side) and the opposite side as an upper side.

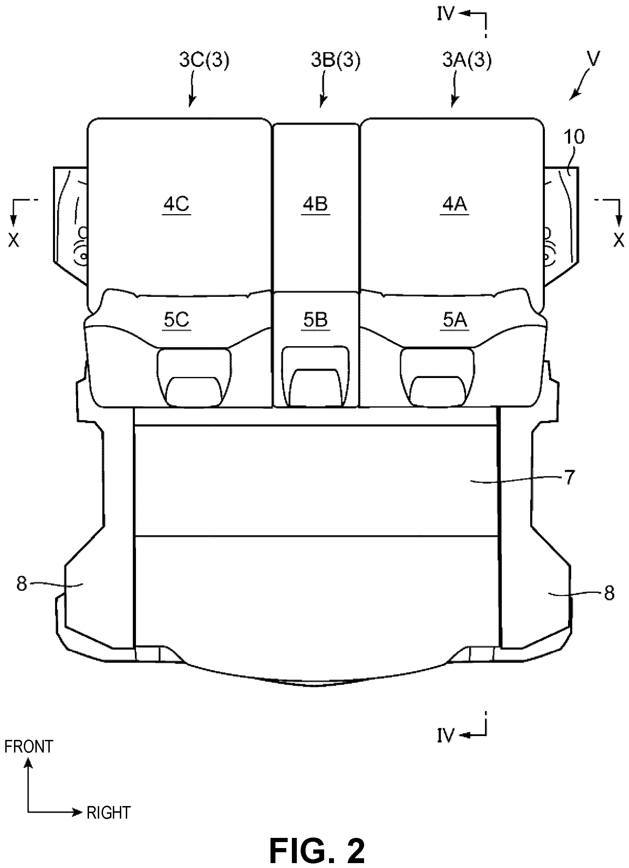

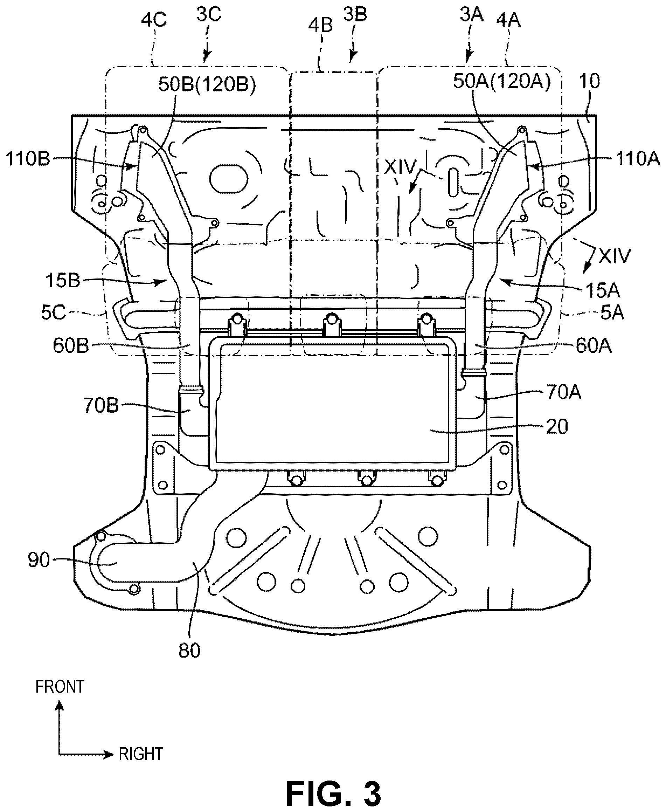

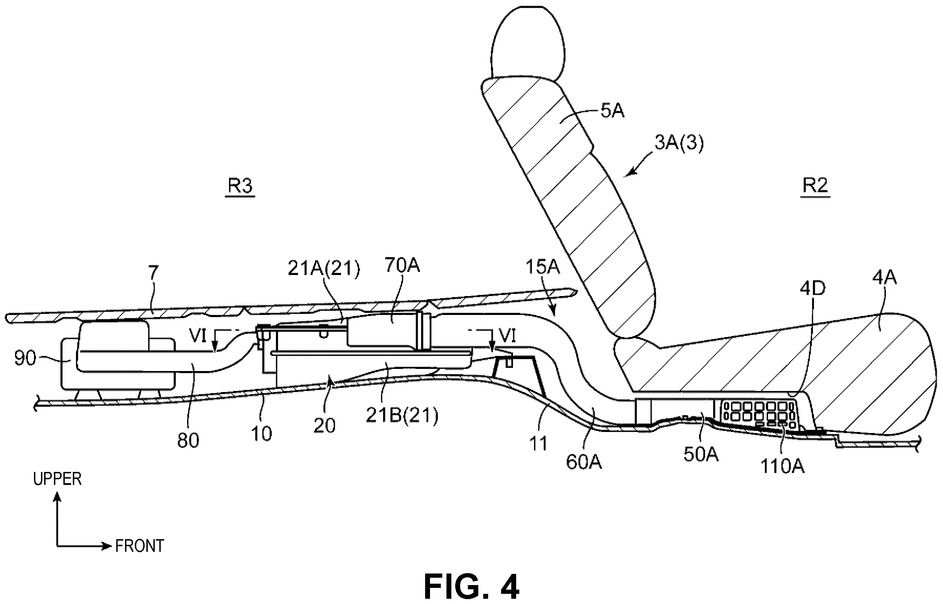

FIG. 2 is a schematic plan view showing part of the vehicle V. FIG. 3 is a view of FIG. 2 in a state in which a second row seat 3, a trunk panel 7, and rear panels 8, 8 are removed, which will be described later. FIG. 4 is a schematic cross-sectional view showing a cross section of the vehicle V corresponding to a line IV-IV in FIG. 2.

In the front (or the front portion) of the vehicle V, there may be defined a driving source mounting compartment R1 in which a drive source is mounted. In the rear of the driving source mounting compartment R1, a vehicle cabin R2 for human may be defined. In the rear of the vehicle cabin R2, a luggage room R3 for mounting luggage may be defined.

In this embodiment, there is no partition wall that separates the vehicle cabin R2 and the luggage room R3, and the space of the vehicle cabin R2 is connected to the space of the luggage room R3. In the case in which the vehicle V is an engine vehicle with an engine as a driving source, the driving source mounting compartment R1 may be a so-called engine room (or compartment), and in the case in which the vehicle V is an electric automobile with a motor as a driving source, the driving source mounting compartment R1 may be a so-called motor room (or compartment).

For example, Vehicle V is a vehicle with a plurality of rows of seats, particularly two rows of seats. The front portion of the vehicle cabin R2 is provided with a driver's seat 1 and a passenger seat 2, and the rear portion of the vehicle cabin R2 is provided with a second row seat 3.

The second row seat 3 may be so-called bench seat for a plurality of people, e.g., three people, and the second row seat 3 may be composed of three rear seats 3A, 3B, 3C. The second row seat 3 may be disposed so that occupants sit facing forward, and the width direction of each rear seat 3A, 3B, 3C coincides with the vehicle width direction, that is, the left-right direction.

Hereinafter, the right-end seat in the second row seat 3 is referred to as a right seat 3A, and the left-end seat therein is referred to as a left seat 3C. The right seat 3A is disposed adjacently to a right side surface 6A of the vehicle cabin R2 that is composed of a right rear door 9A and the peripheral members in the periphery thereof. The left seat 3C is disposed adjacently to a left side surface 6C of the vehicle cabin R2 that is composed of a left rear door 9C and peripheral members in the periphery thereof.

The rear seats 3A, 3B, 3C are respectively provided with seat cushions 4A, 4B, 4C that form the seat surfaces, and seat backs 5A, 5B, 5C that respectively extend upward from the rear ends of the seat cushions 4A, 4B, 4C. The seat cushions 4A, 4B, 4C of the seats 3A, 3B, 3C may be continuous with each other in the left-right direction. The seat backs 5A, 5B, 5C of the rear seats 3A, 3B, 3C are also continuous with each other in the left-right direction. The luggage room R3 may be defined behind the seat backs 5A, 5B, 5C of the second row seat 3.

The vehicle V is provided with a floor panel 10 that forms the floor surface of the vehicle cabin R2 and the luggage room R3. As shown in FIG. 4, in this embodiment, the floor surface of the luggage room R3 may be higher than the floor surface of the vehicle cabin R2, and the floor panel 10 may be provided with a kick-up portion 11 that is provided near the bottom of the seat backs 5A, 5B, 5C of the rear seats 3A, 3B, 3C and is inclined so as to be positioned higher toward the rear.

A battery 20 may be mounted in the luggage room R3. The battery 20 is placed on the upper surface of the floor panel 10. The upper part of the battery 20 may be covered by a plate-shaped trunk panel 7 that is openable and closable. The trunk panel 7 has both the left and right sides each having a rear panel 8 disposed.

### (2) Detailed structure

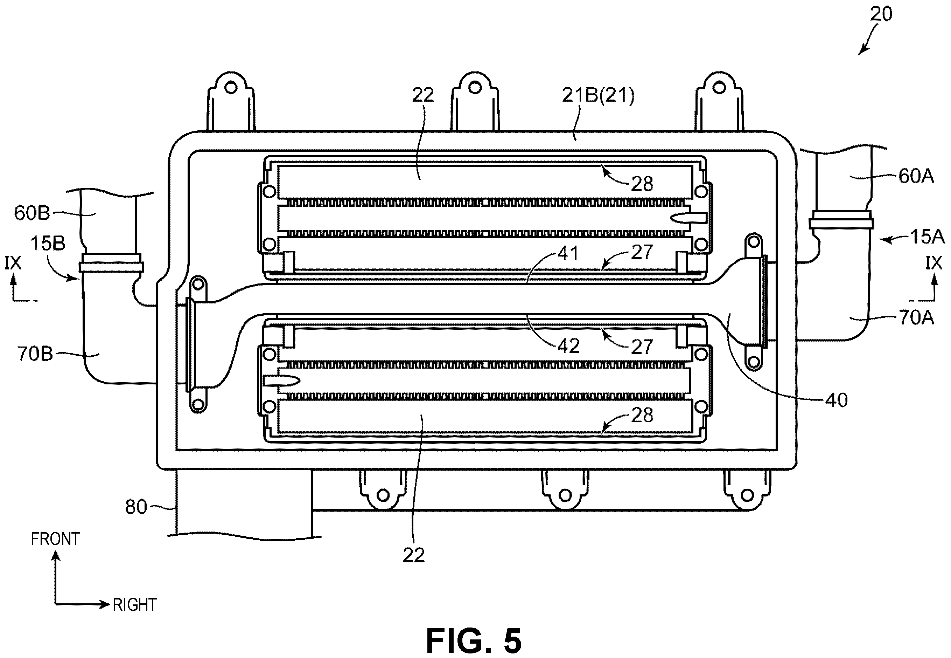

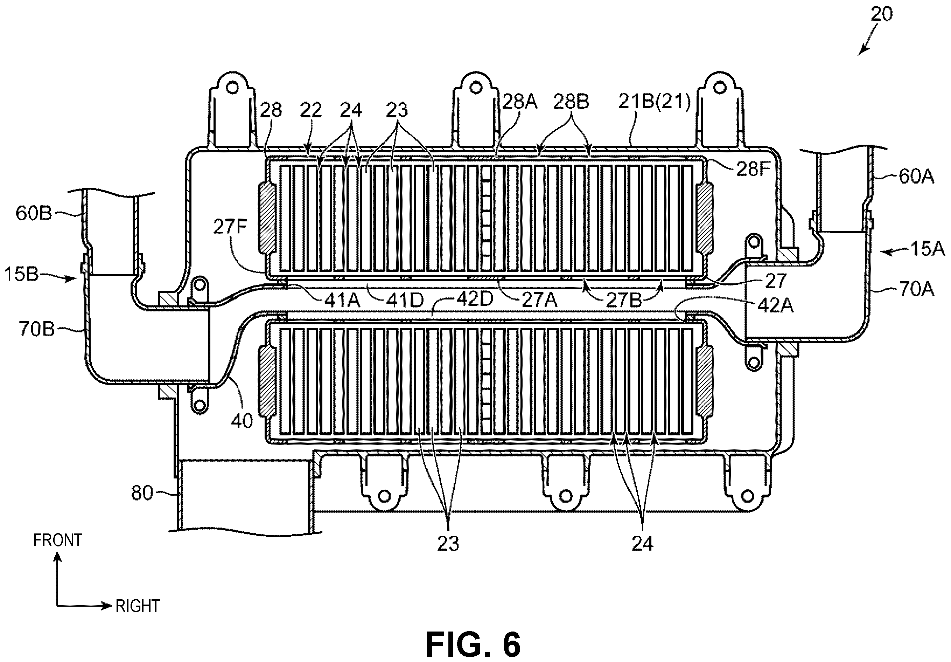

FIG. 5 is a schematic plan view showing the inside of the battery 20. The battery 20 may have a battery case 21 and one or more, particularly two battery modules 22, 22. The battery case 21 has a case body 21B that houses the battery modules 22, 22, and a cover 21A that covers the case body 21B from above. FIG. 6 is a schematic cross-sectional view showing the inside of the battery 20, and corresponds to the cross section of the line VI-VI in FIG. 4.

The battery case 21 is substantially rectangular parallelepiped and is disposed in the luggage room R3 in a posture extending in the left-right direction. The two battery modules 22, 22 each have a substantially rectangular parallelepiped outer shape extending in the left-right direction. Each battery module 22 includes a plurality of battery cells 23 aligned **e.g.,** in a row in the left-right direction. The two battery modules 22, 22 may be aligned in the front-rear direction.

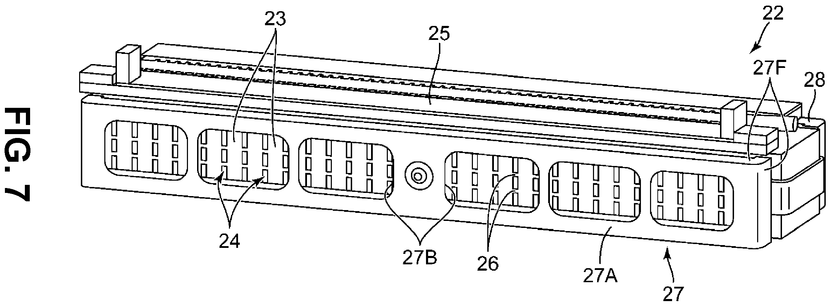

The two battery modules 22, 22 have the same structure. The detailed structure of the battery module 22 will be described using the front battery module 22. FIG. 7 is a schematic perspective view of the battery module 22.

The plurality of battery cells 23 may be disposed with gaps in the left-right direction, and a passage 24 may be defined between the battery cells 23. In the following, the inter-cell passage 24 will be referred to as the inter-cell passage 24.

For example, the upper parts of each battery cell 23 are covered by an upper wall 25 continuously in the left-right direction. Although not shown, the lower surfaces of each battery cell 23 are also covered by a lower wall continuously in the left-right direction. As a result, each inter-cell passage 24 is open only in the front-rear direction. In this embodiment, as shown in FIG. 7, the inter-cell passages 24 are each divided in the up-down direction by the partition wall 26.

The rear end portion of the battery module 22 may be provided with a first cover 27 that covers the battery cells 23 from the rear.

The first cover 27 has a plate-shaped panel 27A extending in the left-right direction at a position spaced rearward from battery cells 23. The panel 27A includes a plurality of guide holes 27B that penetrate from the front to the back in the front-rear direction at positions spaced apart from each other in the left-right direction. In this embodiment, six guide holes 27B are formed in the panel 27A.

The guide holes 27B may be formed in positions facing inter-cell passages 24 in the front-rear direction, and each inter-cell passage 24 is exposed to the rear through a guide hole 27B. For example, in the left-right direction, the position of the right edge of the right-end guide hole 27B substantially coincides with the left-right center of the right-end battery cell 23, and the position of the left edge of the left-end guide hole 27B is substantially coincides with the left-right center of the left-end battery cell 23. For example, in the up-down direction, the upper edge position of each guide hole 27B is substantially coincide with the upper end positions of the inter-cell passages 24, and the lower end position of each guide hole 27B is substantially coincides with the lower end positions of the inter-cell passages 24. Particularly, the panel 27A has portions that divide the guide holes 27B, each portion having a dimension short in the left-right direction. As a result, almost all of the inter-cell passages 24 are exposed to the rear of the panel 27A through the through holes composed of the six guide holes 27B. Also, each inter-cell passage 24 is almost entirely exposed to the rear of the panel 27A.

The first cover 27 may have a flange 27F that extends forward from each of the upper, lower, left, and right edges of the panel 27A. The flange 27F covers the gap between the panel 27A and the group of battery cells 23 from above, below, left, and right. With this configuration, the rear open end of each inter-cell passage 24 is generally in communication with the external space of the battery module 22 only through the guide holes 27B.

The front end portion of the battery module 22 may be provided with a second cover 28 that covers the battery cells 23 from the front. The second cover 28 and the first cover 27 have shapes such that they are symmetrical in the front-rear direction. In other words, the second cover 28 has a plate-shaped panel 28A extending in the left-right direction at a position spaced forward from the battery cells 23.

The panel 28A may have a plurality of (six) guide holes 28B each formed at a position facing the battery cells 23 in the front-rear direction and spaced apart from each other in the left-right direction. Also, almost all of the inter-cell passages 24 are exposed to the front of the panel 28A through each guide hole 28B.

A flange 28F provided on the second cover 28 may cover the gap between the panel 28A and the group of battery cells 23 from above, below, left, and right, and the front open end of each inter-cell passage 24 is generally in communication with the external space of the battery module 22 only through the guide holes 28B. Particularly, as viewed in the front-rear direction, the area of the panel 28A in which the guide holes 28B are formed is approximately coincides with the area occupied by the inter-cell passages 24.

As described above, the two battery modules 22, 22 have the same or substantially the same structure. However, the two battery modules 22, 22 are disposed so as to be point symmetrical as viewed in the up-down direction. Thus, the rear battery module 22 has the first cover 27 provided at the front end portion whereas the front battery module 22 has it provided at the rear end portion, and the rear battery module 22 has the second cover 28 provided at the rear end portion.

As shown in FIG. 3 and the like, the vehicle V is provided with one or more, particularly two cooling air ducts (a first cooling air duct 15A and a second cooling air duct 15B), a cooling air outlet duct 80, and a fan 90 to cool the battery 20, for example, to cool the two battery modules 22, 22. As shown in FIG. 5 and the like, the battery case 21 may house an in-case duct 40 therein as a member for cooling the battery 20. The cooling air ducts 15A, 15B, the in-case duct 40, and the cooling air outlet duct 80 are tubular members, the inside of which cooling air flows to cool the battery 20.

As shown in FIG. 5, the in-case duct 40 has a shape that extends in the left-right direction. The in-case duct 40 is housed in the battery case 21 in a posture of passing between the two battery modules 22, 22 and extending in the left-right direction.

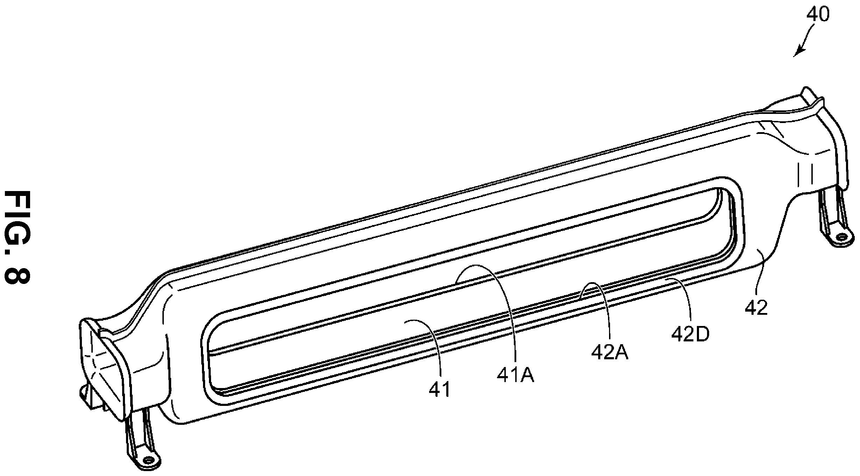

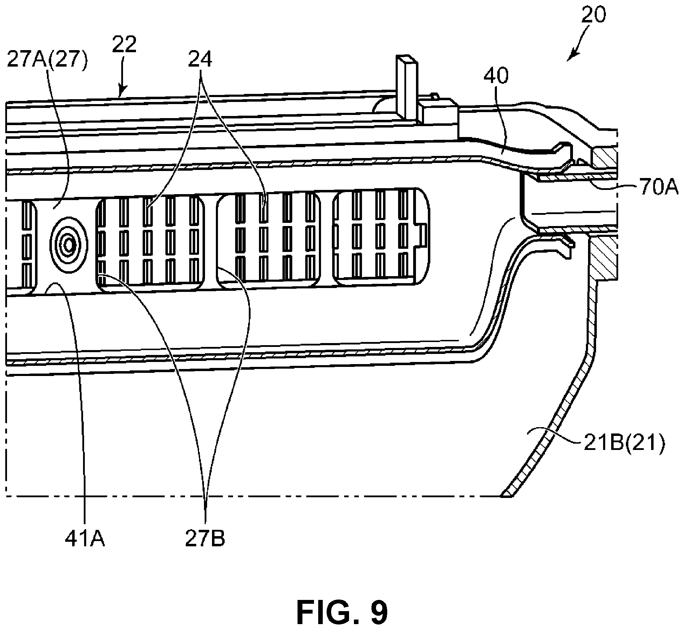

FIG. 8 is a schematic perspective view of the in-case duct 40. FIG. 9 is a schematic perspective view showing part of the battery 20 taken along a line IX-IX in FIG. 5.

The in-case duct 40 may have a substantially rectangular parallelepiped shape extending in the left-right direction, and a cross section perpendicular to the left-right direction may have a substantially rectangular shape extending in the up-down direction. For example, the dimension of the in-case duct 40 in the up-down direction is substantially the same as the dimension of the battery modules 22, 22 in the up-down direction. The dimension of the in-case duct 40 in the left-right direction may be longer than the dimension of the battery modules 22, 22 in the left-right dimension.

The front side surface 41 and rear side surface 42 of the in-case duct 40 may respectively have openings 41A, 42A that penetrate the side surfaces 41, 42 in the front-rear direction. The two openings 41A, 42A are substantially coincide with each other as viewed in the front-rear direction.

The openings 41A, 42A are respectively formed in parts of the side surfaces 41, 42 of the in-case duct 40, the parts each facing a battery module 22, 22 in the front-rear direction. As viewed in the front-rear direction, the opening areas of openings 41A, 42A respectively overlap with the areas where the plurality of guide holes 27B, 28B are formed, that is, the areas where the inter-cell passages 24 each between the battery cells 23 are located.

For example, in the left-right direction, the right end positions of the openings 41A, 42A substantially coincide with the left-right center position of each of the right-end battery cells 23, and the left end positions of the openings 41A, 42A substantially coincide with the left-right center position of each of the left-end battery cells 23. Particularly, in the up-down direction, the positions of the upper ends of the openings 41A, 42A substantially coincide with the positions of the upper ends of the guide holes 27B, 28B, respectively, and the positions of the lower ends of the openings 41A, 42A substantially coincide with the positions of the lower ends of the guide holes 27B, 28B, respectively.

The front side surface 41 of the in-case duct 40 may have an elastic member 41D attached thereto so as to surround the entire circumference of the opening 41A. The elastic member 41D is in close contact with the rear side surface of the first cover 27 of the front battery module 22. The elastic member 41D closes a gap between the front side surface 41 of the in-case duct 40 and the front battery module 22 in the front-rear direction around the opening 41A. Likewise, the rear side surface 42 of the in-case duct 40 has an elastic member 42D attached thereto so as to surround the entire circumference of the opening 42A.

The elastic member 42D may be in close contact with the front side surface of the first cover 27 of the rear battery module 22. The elastic member 42D closes a gap between the rear side surface 42 of the in-case duct 40 and the rear battery module 22 in the front-rear direction around the opening 42A.

The cooling air outlet duct 80 extends rearward from the rear side surface of the battery case 21. For example, the cooling air outlet duct 80 includes a part extending diagonally rearward and leftward from the rear side surface of the battery case 21, and a part extending leftward from the former part.

The cooling air outlet duct 80 may be connected to the battery case 21 penetrating the rear side surface of the battery case 21, and is in communication with the inner space of the battery case 21. The fan 90 may be connected to the end of the cooling air outlet duct 80 opposite the battery case 21. The fan 90 sucks in the air in the cooling air outlet duct 80 and the air in the battery case 21 in turn. In this embodiment, the fan 90 is electric and driven by a motor.

The cooling air ducts 15A, 15B may each extend forward from the battery 20 along the upper surface of the floor panel 10. The rear end of the first cooling air duct 15A is connected to the right end of the in-case duct 40, and the rear end of the second cooling air duct 15B is connected to the left end of the in-case duct 40.

The first cooling air duct 15A and the second cooling air duct 15B are each connected to the in-case duct 40 inside the battery case 21, and extend from the inside of the battery case 21 to the outside of the battery case 21. Particularly, the first cooling air duct 15A penetrates the right side surface of the battery case 21 and extends forward from there, and the second cooling air duct 15B penetrates the left side surface of the battery case 21 and extends forward from there.

The two cooling air ducts (first cooling air duct 15A, second cooling air duct 15B) may have almost the same structure and are disposed almost symmetrically on the left and right. In the following, the structure of the first cooling air duct 15A will be described as a representative, and the structure of the second cooling air duct 15B will be described only briefly.

The first cooling air duct 15A may be disposed on the right part of the floor panel 10, slightly to the left part of the right edge of the floor panel 10. As shown in FIG. 4 and the like, the first cooling air duct 15A extends rearward from below the right seat 3A.

The first cooling air duct 15A may be composed of one or more, particularly three ducts. For example, the first cooling air duct 15A is composed of the first duct 50A, the second duct 60A extending rearward from the rear end of the first duct 50A, and the third duct 70A extending rearward from the rear end of the second duct 60A.

The first duct 50A, the second duct 60A, and the third duct 70A each have a substantially rectangular cross section. The front end of the first duct 50A is open, and cooling air is introduced into the inside of the first cooling air duct 15A from the front end of the first duct 50A. In other words, the front end of the first duct 50A is the upstream end of the first cooling air duct 15A in the flow direction of the cooling air, and forms a part that introduces the cooling air into the inside of the first duct 50A. In the following, the upstream end of the first duct 50A will be referred to as the cooling air introduction portion 110A.

The first duct 50A is disposed below the seat cushion 4A of the right seat 3A. The first duct 50A is inclined diagonally rearward and leftward as a whole.

As viewed in the up-down direction, the first duct 50A may be disposed in a position where its entirety is covered by the seat cushion 4A of the right seat 3A. For example, in the front-rear direction, the front end position of the first duct 50A is rearward of the front end position of the seat cushion 4A of the right seat 3A, and the rear end position of the first duct 50A is approximately the same as the rear end position of the seat cushion 4A. The right end position of the first duct 50A is to the left of the right edge of the seat cushion 4A of the right seat 3A, and the left end position of the first duct 50A is to the left of the left edge of the seat cushion 4A of the right seat 3A.

In this embodiment, the front end position of the first duct 50A is forward, or slightly forward of the center of the seat cushion 4A in the front-rear direction. The first duct 50A is disposed below the right part of the seat cushion 4A of the right seat 3A. In other words, in the left-right direction, the first duct 50A is disposed in a position shifted to the right from the center of the seat cushion 4A of the right seat 3A.

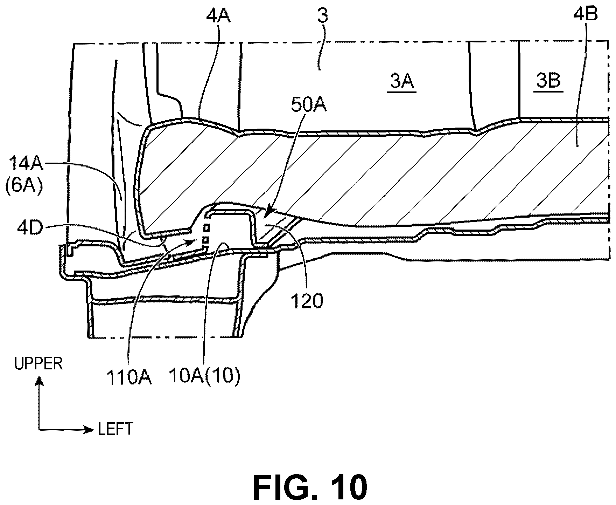

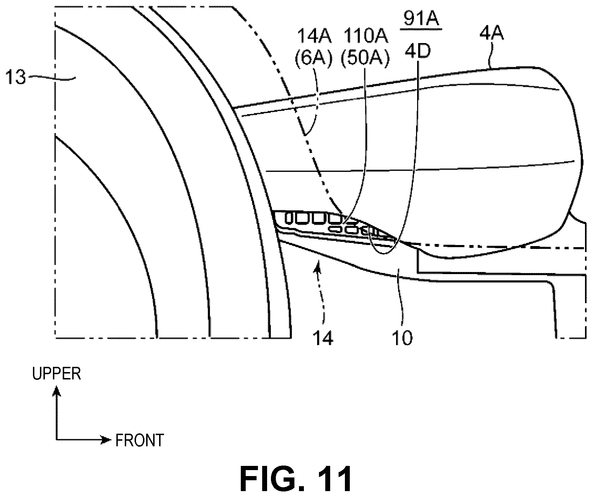

FIG. 10 is a schematic view showing part of the cross section taken along a line X-X in FIG. **2****.** As shown in FIG. 10 and the like, the cooling air introduction portion 110A opens toward the right side. FIG. 11 is a schematic side view of the lower periphery of the right seat 3A as viewed from the right. As shown in FIG. 11 and the like, the rear portion of the seat cushion 4A of the right seat 3A as viewed from the right may be curved so that it is positioned higher toward the rear, and the lower right and rear part of the seat cushion 4A may have a recess 4D recessed upward.

The cooling air introduction portion 110A is disposed in the recess 4D, and is exposed to the right of the seat cushion 4A through the recess 4D. In this embodiment, part of the cooling air introduction portion 110A is exposed to the right of the seat cushion 4A.

As described above, the right end position of the first duct 50A is to the left of the right edge of the seat cushion 4A of the right seat 3A, and the position of the cooling air introduction portion 110A formed by the front end of the first duct 50A is also to the left of the right edge of the seat cushion 4A of the right seat 3A. As a result, the front space of the cooling air introduction portion 110A in the opening direction has its upper part that is covered by the seat cushion 4A.

As described above, the right seat 3A is disposed **e.g.,** adjacently to the right side surface 6A of the vehicle cabin R2, and the cooling air introduction portion 110A opens toward the right side surface 6A of the vehicle cabin R2. In this embodiment, the cooling air introduction portion 110A faces the periphery of the right rear door 9A in the left-right direction, for example, faces a lock pillar 14 provided at the lower rear of the rear door 9A and a tire house trim 14A disposed on the vehicle cabin side of the lock pillar 14.

Particularly, the cooling air introduction portion 110A opens toward the tire house trim 14A that forms part of the right side surface 6A of the vehicle cabin R2. The cooling air introduction portion 110A is disposed in a position where part of it overlaps with the opening 91A of the rear door 9A as viewed in the left-right direction. The above-described tire house trim 14A corresponds to a "peripheral member provided in a periphery of a door" of the present invention.

As shown in FIG. 10 and the like, the lower surface of the first duct 50A may be formed by the floor panel 10, and the first duct 50A includes a bottom wall 10A that is made up of part of the floor panel 10 and forms the lower surface of the first duct 50A, and a duct body 120A that is disposed above the bottom wall 10A.

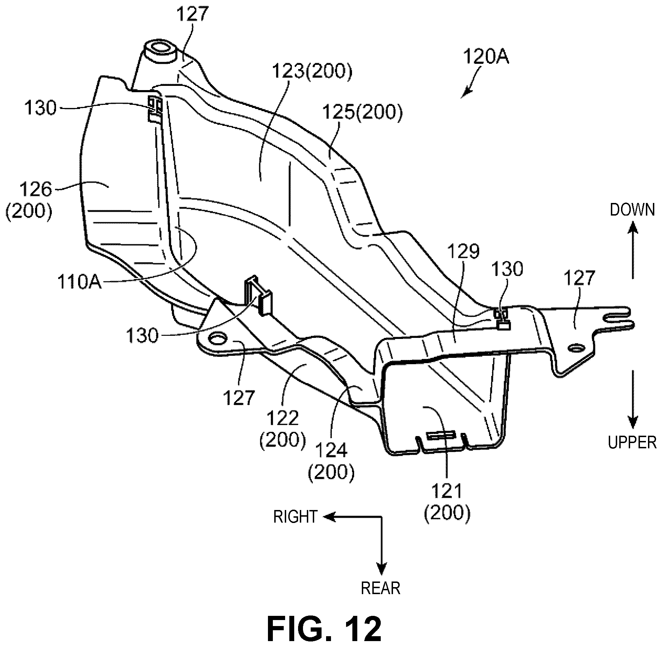

FIG. 12 is a schematic perspective view of the duct body 120A, and is a view of the duct body 120A viewed from below or from a surface to be located at the bottom in a state in which the duct body 120A is attached to the floor panel 10. In the following description of the duct body 120A, the direction is used in which the duct body 120A is attached to the floor panel 10.

The duct body 120A may include a passage partition portion 200 having an substantially U-shape, a plurality of fixing portions 127, and a plurality of protrusions 130. In this embodiment, the duct body 120A may be made of resin, and may have the passage partition portion 200, the fixing portions 127, and the protrusions 139 that are formed integrally with each other.

The passage through which the cooling air flows in the first duct 50A may be defined by the passage partition portion 200 and the floor panel 10 (bottom wall 10A). The passage partition portion 200 includes an upper wall 121 that forms the upper surface of the duct body 120A and the first duct 50A, a right wall 122 that extends downward from the right edge of the upper wall 121, and a left wall 123 that extends downward from the left edge of the upper wall 121.

For example, the front end of the left wall 123 is curved diagonally rightward and forward. The passage partition portion 200 may also include a right flange 124 extending rightward from the lower edge of the right wall 122, and a left flange 125 extending leftward from the lower edge of the left wall 123. The passage partition portion 200 may also include a front flange 126 extending in the front-rear direction from the front end of the right flange 124 to the front end of the left flange 125. As viewed in the up-down direction, the front flange 126 extends toward the right from the front ends of the upper wall 121, the right wall 122, and the left wall 123.

As described above, the passage through which the cooling air flows is defined by the passage partition portion 200 and the floor panel 10 (bottom wall 10A). However, in this embodiment, the cooling air introduction portion 110A may be composed of only the passage partition portion 200. For example, the cooling air introduction portion 110A is defined by the front edges of the upper wall 121, the right wall 122, and the left wall 123 of the duct body 120A, and the left edge of the front flange 126.

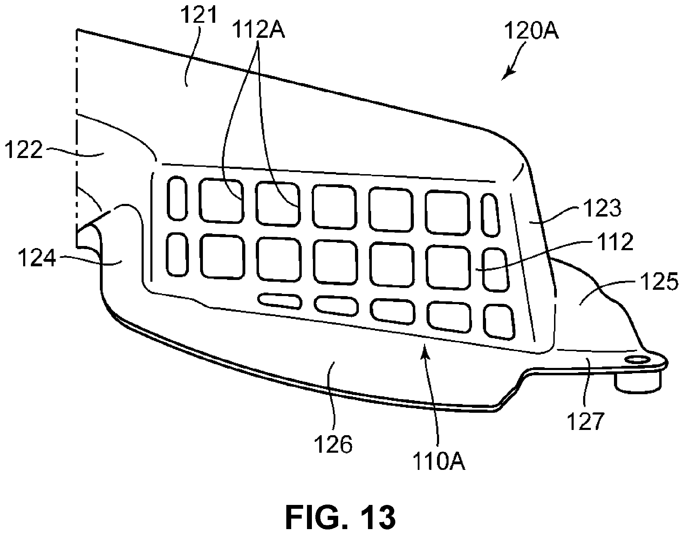

FIG. 13 is a schematic perspective view showing part of the duct body 120A. As shown in FIG. 13, the cooling air introduction portion 110A, which is the upstream end of the duct body 120A, may be provided with a foreign object entry prevention portion 112 that has a mesh shape and prevents foreign objects from entering the first duct 50A and the first cooling air duct 15A in turn. For example, the foreign object entry prevention portion 112 is plate-shaped and perpendicular to the opening direction of the cooling air introduction portion 110A.

The foreign object entry prevention portion 112 has a plurality of through holes 112A formed in a grid pattern that penetrates from the front to the back of the foreign object entry prevention portion 112. This prevents foreign objects larger than each through hole 112A from entering the first cooling air duct 15A while allowing cooling air to be introduced into the first cooling air duct 15A through each through hole 112A. In the example of FIG. 13, the through hole 112A has a rectangular or a substantially rectangular shape.

The fixing portions 127 are portions for fixing the duct body 120A to the floor panel 10. In this embodiment, one or more, particularly three fixing portions 127 are provided on the duct body 120A. For example, the duct body 120 has a fixing portion 127 that extends forward from the front end of the right flange 124, a fixing portion 127 that extends leftward from the rear end of the left flange 125, and a fixing portion 127 that extends rightward from near the center of the right flange 124 in the front-rear direction. These fixing portions 127 are fixed to the floor panel 10 e.g., by bolts R, and thus the duct body 120A is fixed to the upper surface of the floor panel 10.

The protrusions 130 may be columnar members extending in the up-down direction, and protrude downward from the passage partition portion 200. In this embodiment, the cross-sectional shape of each protrusion 130 is e.g., I-shaped.

Each protrusion 130 is provided near a fixing portion 127. For example, a protrusion 130 is provided near the front end of the right flange 124, the protrusion 130 protruding downward from the lower surface of the right flange 124.

A protrusion 130 is provided near the rear end of the left flange 125, the protrusion 130 protruding downward from the lower surface of the left flange 125. A protrusion 130 is provided near the center of the right flange 124 in the front-rear direction, the protrusion 130 protruding downward from the lower surface of the right flange 124.

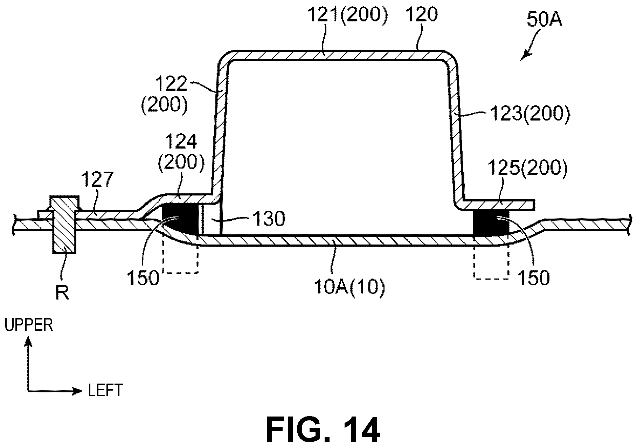

FIG. 14 is a schematic cross-sectional view taken along a line XIV-XIV in FIG. 3. As shown in FIG. 14, the duct body 120A is fixed to the upper surface of the floor panel 10 with the lower end of each protrusion 130 being in contact with the floor panel 10.

A seal member 150 may be disposed between the passage partition portion 200 and the floor panel 10. For example, the seal member 150 is disposed between the lower surfaces of the flanges 124, 125, 126 that form the lower surface of the passage partition portion 200 and the upper surface of the floor panel 10. The seal member 150 is an elastic member. The seal member 150 is made of, for example, urethane.

The dashed line in FIG. 14 shows the seal member 150 with no elastic deformation. As shown in this figure, the height dimension of the seal member 150 with no elastic deformation is smaller than the height dimension of the protrusion 130. As a result, the duct body 120A is fixed to the upper surface of the floor panel 10 with the seal member 150 contracted in the up-down direction between the passage partition portion 200 and the floor panel 10. In this state of fixation, the seal member 150 is in contact or in close contact with the lower surface of the duct body 120A and the upper surface of the floor panel 10 to close the gap between them. Although not shown, the seal member 150 may be disposed over almost the entire longitudinal direction of each of the flanges 124, 125, and 126. As a result, the gap between the passage partition portion 200 and the floor panel 10 is closed or almost entirely closed by the seal member 150.

The second duct 60A may be connected to the rear end of the first duct 50A. For example, a frame-shaped connection 129 is provided at the rear end of the duct body 120A. With the connection 129 into which the front end of the second duct 60A is inserted, the second duct 60A is connected with the first duct 50A. The second duct 60A may include a part that curves upward and diagonally rearward from the rear end of the first duct 50A, and a part that extends straight rearward from the former part.

The third duct 70A may be L-shaped or substantially L-shaped and includes a part that extends straight rearward from the rear end of the second duct 60A and a part that extends leftward from the former part. The leftward extending part of the third duct 70A is inserted into the battery case 21 and is connected to the in-case duct 40 inside the battery case 21.

Here, the first cooling air duct 15A and the second cooling air duct 15B each correspond to a "cooling air duct" of the present invention, the right seat 3A may correspond to a "seat" or a "duct-top-seat" corresponding to the first cooling air duct 15A, and the left seat 3C may correspond to a "seat" or a "duct-top-seat" corresponding to the second cooling air duct 15B.

Next, the second cooling air duct 15B will be briefly described. As described above, the first cooling air duct 15A and the second cooling air duct 15B are almost bilaterally symmetrical.

The second cooling air duct 15B is disposed on the left part of the floor panel 10, slightly to the right part of the left edge of the floor panel 10. The second cooling air duct 15B extends rearward from below the left seat 3C.

Similarly to the first cooling air duct 15A, the second cooling air duct 15B may also be composed of a first duct 50B, a second duct 60B and a third duct 70B, each of which has a substantially rectangular cross section. The front end of the first duct 50B is the upstream end of the second cooling air duct 15B and forms the cooling air introduction portion 110B that introduces cooling air into the inside of the second cooling air duct 15B.

The first duct 50B of the second cooling air duct 15B is disposed below the seat cushion 4C of the left seat 3C. The first duct 50B of the second cooling air duct 15B is inclined diagonally rearward and rightward as a whole. As viewed in the up-down direction, the first duct 50B is disposed in a position where its entirety is covered by the seat cushion 4C of the left seat 3C. Particularly, the first duct 50B of the second cooling air duct 15B is disposed in a position shifted leftward from the center of the seat cushion 4C of the left seat 3C in the width direction, and is disposed in an area to the right of the left edge of the seat cushion 4A of the left seat 3C.

The cooling air introduction portion 110B of the second cooling air duct 15B opens toward the left. Although not shown, similarly to the right seat 3A, the lower left and rear part of the seat cushion 4C of the left seat 3C may have a recess recessed upward. The cooling air introduction portion 110B of the second cooling air duct 15B is disposed below this recess, and ]is exposed to the left of the seat cushion 4C through the recess. The cooling air introduction portion 110B opens toward the periphery of the left rear door 9C, for example, toward a tire house trim that faces a lock pillar, disposed at the lower rear of the rear door 9C, in the left-right direction, and that is disposed on the vehicle cabin side to form part of the left side surface 6C of the vehicle cabin R2. Particularly, the cooling air introduction portion 110B of the second cooling air duct 15B is disposed in a position that partially overlaps with the opening of the left rear door 9C as viewed in the left-right direction.

Similarly to the first duct 50A of the first cooling air duct 15A, the first duct 50B of the second cooling air duct 15B may be composed of a bottom wall formed by part of the floor panel 10 and a substantially U-shaped duct body 120B disposed above the bottom wall.

In the second cooling air duct 15B, the duct body 120B may also be provided with the foreign object entry prevention portion having the above-described structure, a plurality of (three in this embodiment) fixing portions, and a plurality of protrusions protruding downward from the duct body 120B. In the second cooling air duct 15B, a seal member may be disposed between the duct body 120B and the floor panel 10, and the duct body 120B is fixed to the upper surface of the floor panel 10 with the seal member being elastically deformed.

Similarly to the first cooling air duct 15A, the second cooling air duct 15B may have the second duct 60B connected to the rear end of the first duct 50B. However, in the second cooling air duct 15B, the second duct 60B includes a part that curves upward and diagonally rearward from the rear end of the first duct 50B and a part that extends straight rearward from the former part. As shown in FIG. 3, in this embodiment, the dimension of the second duct 60B of the second cooling air duct 15B may be set to a value longer in the front-rear direction than the dimension of the second duct 60A of the first cooling air duct 15A in the front-rear direction.

Similarly to the first cooling air duct 15A, the third duct 70B of the second cooling air duct 15B may also be L-shaped or substantially L-shaped. However, in the second cooling air duct 15B, the third duct 70B may include a part that extends straight rearward from the rear end of the second duct 60B and a part that extends rightward from the former part. This rightward extending part is connected to the in-case duct 40 inside the battery case 21.

With the above-described configuration, in this embodiment, when the fan 90 is driven to suck in air from the cooling air outlet duct 80, the air from the vehicle cabin R2 is introduced as cooling air into the first cooling air duct 15A and the second cooling air duct 15B respectively through the cooling air introduction portions 110A, 110B. Then, the cooling air is introduced into the in-case duct 40 from both the left and right ends of the in-case duct 40, and the cooling air is introduced into each inter-cell passage 24 through the openings 41A, 42A of the in-case duct 40 and the guide holes 27B, 28B of the covers 27, 28. The cooling air exchanges heat with the battery cells 23, that is, cools the battery cells 23 while passing through each inter-cell passage 24. The cooling air is then led from the end of each inter-cell passage 32 opposite the in-case duct 40 in the front-rear direction to the inner space of the battery case 21, which inner space of the battery case 21 is outside the battery module 22. The cooling air led to the outside of the battery module 22 is then discharged to the rear of the vehicle V through the cooling air outlet duct 80.

### (3) Effects and the like

As described above, in the vehicle V of the above embodiment, the cooling air introduction portion 110A (110B), which is the upstream end of the cooling air duct 15A (15B), is disposed below the rear seat 3A (3C), and the cooling air duct 15A (15B) extends rearward from below the rear seat 3A (3C). Therefore, the battery 20 can be disposed behind the rear seat 3A (3C) while air can be supplied to the battery 20, in which the air is air in the vehicle cabin R2 having the rear seat 3A (3C) disposed therein and the air is kept at a relatively low temperature by air conditioning or the like. In particular, in the above embodiment, the battery 20 can be disposed in the luggage room R3 provided at the rear of the vehicle while air in the vehicle cabin R2 can be supplied to the battery 20. Therefore, the battery 20 can be reliably cooled. Moreover, the cooling air introduction portion 110A of the first cooling air duct 15A is on the right side and opens toward one side of the right seat 3A in the width direction. The cooling air introduction portion 110B of the second cooling air duct 15B is on the left side and opens toward one side of the right seat 3A in the width direction. Thus, the space below the rear seat 3A (3C) can effectively be used as the installation space for the cooling air duct 15A (15B) while the legs of an occupant sitting on the rear seat 3A (3C) can be prevented from closing the cooling air introduction portion 110A (110B). This enables securing the amount of cooling air introduced into the cooling air duct 15A (15B) and the battery 20 in turn, and cooing the battery 20 well.

For example, the seat 3A (3C) above the cooling air introduction portion 110A (110B) is disposed adjacently to the side surface (right side surface 6A, left side surface 6C) of the vehicle cabin R2, and the cooling air introduction portion 110A (110B) opens toward this side surface (right side surface 6A, left side surface 6C). In other words, the front space of the cooling air introduction portion 110A (110B) in the opening direction is made into a space, located between the seat 3A (3C) and the side surface of the vehicle cabin R2 adjacent thereto, that has relatively little opportunity in which luggage or the like is loaded. This makes it possible to prevent the cooling air introduction portion 110A (110B) from being closed by luggage or the like.

In particular, in the above embodiment, the seat 3A (3C) above the cooling air introduction portion 110A (110B) is disposed adjacently to the rear door 9A (9B), and the cooling air introduction portion 110A (110B) opens toward the tire house trim 14A provided at the periphery of the rear door 9A (9B). Here, since the rear door 9A (9B) is opened and closed, there is little opportunity for luggage or the like to be loaded into the gap between the tire house trim 14A located in the periphery of the rear door 9A (9B) and the rear seat 3A (3C). Therefore, according to the above embodiment, it is possible to further prevent the cooling air introduction portions 110A, 110B from being closed by luggage or the like.

Further particularly, in the left-right direction, the first duct 50A of the first cooling air duct 15A is disposed in a position shifted to the right from the center of the right seat 3A in the left-right direction, and the first duct 50B of the second cooling air duct 15B is disposed in a position shifted to the left from the center of the left seat 3C in the left-right direction. In other words, in the left-right direction, the cooling air duct 15A (15B) is disposed in a part on one side in the width direction of the seat 3A (3B) with respect to the center of the seat 3A (3B) disposed above the cooling air duct 15A (15B), the part being where the load applied by a sitting occupant is relatively small. Therefore, when an occupant sits on the seat 3A (3B), the load can be kept small that is applied from the occupant to the cooling air duct 15A (15B) via the seat 3A (3B). This makes it possible to prevent the cooling air duct 15A (15B) from being damaged.

Further particularly, the recess 4D recessed upward is formed in the lower right side of the seat cushion 4A of the right seat 3A, that is, the lower part of the seat on one side in the width direction, and the cooling air introduction portion 110A of the first cooling air duct 15A is disposed below this recess 4D. The recess recessed upward is formed in the lower left side of the seat cushion 4C of the left seat 3C, and the cooling air introduction portion 110B of the second cooling air duct 15B is disposed within this recess. In other words, the seat 3A (3C) above the cooling air introduction portion 110A (110B) has a lower part where the recess 4D is formed, the lower part being located on the side, where the cooling air introduction portion 110A (110B) opens, in the width direction of the seat 3A (3C). The cooling air introduction portion 110A (110B) is disposed in this recess. This makes it possible to prevent the cooling air introduction portion 110A (110B) from being closed by the seat cushion 4A (4C) of the seat 3A (3C) itself.

Further particularly, the cooling air introduction portion 110A of the first cooling air duct 15A is located to the left of the right end surface of the right seat 3A, and the cooling air introduction portion 110B of the second cooling air duct 15B is located to the right of the left end surface of the left seat 3C. In other words, the cooling air introduction portion 110A (110B) is located inward, in the width direction of the seat 3A (3C) above it, from the end surface on the side where the cooling air introduction portion 110A (110B) opens, and the upper part of the front space of the cooling air introduction portion 110A (110B) in the opening direction is covered by the seat cushion 4A (4C). This makes it possible to prevent foreign objects such as dust from entering the cooling air introduction portion 110A (110B) and the cooling air duct 15A (15B) in turn.

Further particularly, in the above embodiment, the cooling air introduction portion 110A (110B) is provided with a mesh shaped foreign object entry prevention portion 112. This makes it possible to reliably prevent foreign objects from entering the cooling air duct 15A (15B) through the cooling air introduction portion 110A (110B).

Further particularly, the bottom wall 10A forming the lower surface of the cooling air duct 15A (15B) is formed by the floor panel 10. This makes it possible to lower the height position of the upper end of the cooling air duct 15A (15B) while securing the dimension of the cooling air duct 15A (15B) in the up-down direction compared to the case in which a member forming the lower surface of the cooling air duct 15A (15B) is provided separately from the floor panel 10 and the member is disposed on the floor panel 10. This then makes it possible to secure the flow path area of the cooling air duct 15A (15B) and the flow rate of the cooling air in turn while preventing the cooling air duct 15A (15B) from interfering with the seat 3A (3C) above it.

The floor panel 10 has a complicated shape. Therefore, if the duct body 120A (120B) were directly fixed to the floor panel 10, a gap would be generated between the floor panel 10 and the duct body 120A (120B). For this, in the above embodiment, a seal member 150 made of an elastic member is disposed between the passage partition portion 200 of the duct body 120A (120B), which defines the passage of the cooling air, and the floor panel 10. The seal member 150 is thus elastically deformed to be brought into close contact with the passage partition portion 200 and the floor panel 10, thereby closing the gap between them. This makes it possible to prevent the cooling air duct 15A (15B) from leaking cooling air to the outside in the middle, and secure the amount of cooling air supplied to the battery 20.

However, when the configuration is such that the seal member 150 made of an elastic member is simply provided between the passage partition portion 200 and the floor panel 10, the passage partition portion 200 may move downward relative to the floor panel 10 due to a downward load applied to the passage partition portion 200 by an occupant sitting on the seat 3A (3C) and the like. If the amount of movement is excessive, there may be a significant shift in the relative position in the up-down direction between the passage partition portion 200 and the fixing portion 127 fixed to the floor panel 10, damaging the periphery of the fixing portion 127. For this, in the above embodiment, the duct body 120A (120B) is provided with protrusions 130 that protrude downward from the passage partition portion 200 and are configured to be in contact with the floor panel 10. Therefore, the contact of the protrusions 130 and the floor panel 10 can prevent excessive downward movement of the passage partition portion 200 and the above-described damage.

### (4) Modifications

In the above embodiment, a case is described in which the vehicle is equipped with two cooling air ducts (first cooling air duct 15A, second cooling air duct 15B) for introducing cooling air to the battery 20, but the number of cooling air duct to be mounted may be only one. Also, three or more duct may be provided.

In the above embodiment, a case is described in which the cooling air ducts 15A, 15B extend rearward from below the second row seat (right seat 3A, left seat 3C), but the cooling air ducts 15A, 15B may be disposed so as to extend rearward from below first row seats, such as the driver's seat 1 or the passenger seat 2. In addition, in a vehicle V with three or more rows of seats, the cooling air ducts 15A, 15B may be disposed so as to extend rearward from below seats in the third row or in a rear row thereof. In addition, the vehicle V is not limited to a vehicle with two rows of seats.

In the above embodiment, a case is described in which the width direction of the seats (right seat 3A, left seat 3C) located above the cooling air introduction portions 110A, 110B coincides with the vehicle width direction, but the installation orientation of the seats is not limited to this.

In the above embodiment, a case is described in which the foreign object entry prevention portion 112 has substantially rectangular through holes 112A formed in a grid pattern as shown in FIG. 13, but the specific shape of the foreign object entry prevention portion 112 is not limited to this. For example, the foreign object entry prevention portion 112 may be formed in a honeycomb shape, and the through hole 112A formed in the foreign object entry prevention portion 112 may be hexagonal or octagonal.

### [Reference Signs List]

3A right seat (duct-top-seat)
3B left seat (duct-top-seat)
4A seat cushion (for right seat)
4B seat cushion (for left side seat)
4D recess
6A (right) side surface of vehicle cabin
6C (left) side surface of vehicle cabin
10 floor panel
10A bottom wall
14A tire house trim (peripheral member)
15A first cooling air duct (cooling air duct)
15B second cooling air duct (cooling air duct)
20 battery
110A cooling air introduction portion of first cooling air duct (upstream end of first cooling air duct)
110B cooling air introduction portion of second cooling air duct (upstream end of second cooling air duct)
112 foreign object entry prevention portion
130 protrusion
150 seal member (elastic member)
200 passage partition portion
R2 vehicle cabin

## Claims

1. A battery cooling structure for cooling a battery (20), the structure comprising:
a cooling air duct (15A, 15B) inside which cooling air to be supplied to the battery (20) flows; and
a seat (3A, 3B) on which an occupant can sit, the seat (3A, 3B) being disposed in front of the battery (20) in a vehicle front-rear direction and above the cooling air duct (15A, 15B),
wherein an upstream end of the cooling air duct (15A, 15B) is open below the seat (3A, 3B) toward one side of the seat (3A, 3B) in a width direction.

2. The battery cooling structure according to claim 1, wherein the seat (3A, 3B) is disposed in a posture in which a width direction of the seat (3A, 3B) coincides with a vehicle width direction.

3. The battery cooling structure according to claim 1 or 2, wherein
the seat (3A, 3B) is disposed adjacently to a side surface (6A, 6C) of a vehicle cabin (R2) in a vehicle width direction, and
the upstream end of the cooling air duct (15A, 15B) opens toward the side surface (6A, 6C).

4. The battery cooling structure according to any one of the preceding claims, wherein
the seat (3A, 3B) is disposed adjacently to a door (9A, 9C) provided in the vehicle cabin (R2), and
the upstream end of the cooling air duct (15A, 15B) opens toward a peripheral member provided in a periphery of the door (9A, 9C).

5. The battery cooling structure according to any one of the preceding claims, wherein the cooling air duct (15A, 15B) is disposed at a position shifted toward the one side from a center of the seat (3A, 3B) in the width direction of the seat (3A, 3B).

6. The battery cooling structure according to claim 1, wherein
a recess (4D) recessed upward is formed in a lower part of the seat (3A, 3B) on the one side in the width direction of the seat (3A, 3B), and
the upstream end of the cooling air duct (15A, 15B) is disposed below the recess (4D) and is disposed inward of an end surface of the seat (3A, 3B) on the one side in the width direction of the seat (3A, 3B).

7. The battery cooling structure according to any one of the preceding claims, wherein a foreign object entry prevention portion (112) having a mesh shape is provided at the upstream end of the cooling air duct (15A, 15B).

8. The battery cooling structure according to claim 7, wherein the foreign object entry prevention portion (112) preventing a foreign object from entering an inside of the cooling air duct (15A, 15B).

9. The battery cooling structure according to any one of the preceding claims, further comprising a floor panel (10) that forms a floor surface of a vehicle cabin (R2),
wherein the cooling air duct (15A, 15B) includes a bottom wall (10A) forming a lower surface of the cooling air duct (15A, 15B), and a passage partition portion (200) disposed above the bottom wall (10A) and defining, together with the bottom wall (10A), a passage therebetween through which cooling air flows, the bottom wall (10A) being formed by the floor panel (10).

10. The battery cooling structure according to claim 9, wherein
a seal member (150) made of an elastic member is disposed between the passage partition portion (200) and the floor panel (10), and/or
the cooling air duct (15A, 15B) includes a fixing portion (127) that is formed integrally with the passage partition portion (200) and is configured to fix the passage partition portion (200) to the floor panel (10), and a protrusion (130) that protrudes downward from the passage partition portion (200) and is in contact with the floor panel (10).

11. The battery cooling structure according to any one of the preceding claims, wherein the seat (3A, 3B) is a rear seat disposed behind a driver's seat (1).

12. A vehicle comprising the battery cooling structure according to any one of the preceding claims.

13. The vehicle (V) according to claim 12, further comprising a battery (20) to which the cooling air is supplied through the colling air duct (15A, 15B).

14. The vehicle (V) according to claim 12 or 13,
wherein the battery (20) has a case (21) and battery modules (22) housed in the case (21), and
wherein the battery case (21) is configured to house an in-case duct (40) passing between the battery modules (22) and connected to the cooling air duct (15A, 15B).

15. The vehicle (V) according to claim 14, wherein the in-case duct (40) extends in the width direction.
